# EUROPÄISCHE PATENTSCHRIFT

(11) **EP 0 741 115 B1**
(45) Veröffentlichungstag und Bekanntmachung des Hinweises auf die Patenterteilung: **23.12.1998**
(21) Anmeldenummer: 96106170.2
(22) Anmeldetag: 19.04.1996
(51) Int. Cl.: C04B 35/599

(54) **Gesinterter polykristalliner Werkstoff sowie Verfahren zu dessen Herstellung**
Sintered polycrystalline material and method of making it
Matériau fritté polycristallin et procédé pour sa fabrication

(30) Priorität: 02.05.1995 DE 19515968
(43) Veröffentlichungstag der Anmeldung: 06.11.1996
(73) Patentinhaber: BAYER AG, 51368 Leverkusen (DE); FRAUNHOFER-GESELLSCHAFT ZUR FÖRDERUNG DER ANGEWANDTEN FORSCHUNG E.V., 80636 München (DE)
(72) Erfinder: Frassek, Lutz, Dr., 96472 Rödental (DE); Wötting, Gerhard, Dr., 96450 Coburg (DE); Schubert, Christian, Dr., 01326 Dresden (DE); Klemm, Hagen, Dr., 01309 Dresden (DE)
(74) Vertreter: Steiling, Lothar, Dr.

(56) Entgegenhaltungen:
- DE-A- 2 733 354
- PROC. BR. CERAM. SOC., Bd. 25, 1975, Seiten 263-280, XP000600267 N.J. OSBORNE: "Creep testing of high temperature engineering ceramics"

## Beschreibung

Die vorliegende Erfindung betrifft einen gesinterten polykristallinen Werkstoff, bestehend aus den Phasen α'-SiAlON, β'-SiAlON, sowie amorphen und/oder kristallinen Korngrenzphasen, wobei Einlagerungs- und/oder Verstärkungskomponenten enthalten sein können, sowie Verfahren zu dessen Herstellung.

Die Eignung von Siliciumnitridmaterialien für einen Einsatz als keramischer Strukturwerkstoff bei Temperaturen >1200°C wird von einem breiten Spektrum an Werkstoffcharakteristika bestimmt, die sowohl bei Raumtemperatur als auch bei hohen Temperaturen das erforderliche Eigenschaftsniveau gewährleisten müssen. Bei der Herstellung von polykristallinen Siliciumnitridsinterkörpern werden für das vollständige Verdichten zu hochfesten Werkstoffen in der Regel Sinterhilfsmittel zugesetzt. Diese bilden beim Sintern mit dem sich im Siliciumnitridpulver befindlichen SiO₂ eine flüssige Glasphase, welche die Verdichtung fördert und auch einen positiven Einfluß auf die Raumtemperatureigenschaften hat, beruhend auf einer Verringerung der kritischen Defektgröße durch leichteres Sintern sowie Ausbildung eines Gefüges mit stengeligen Si₃N₄-Körnern. Nach der Sinterung verbleibt diese Schmelzphase als amorphe oder (teil-)kristalline Korngrenzenphase zwischen den Siliciumnitridkörnern. Die Hochtemperatureigenschaften der Siliciumnitridwerkstoffe werden wesentlich von der Beschaffenheit dieser Korngrenzenphase bestimmt. Durch die Ausbildung von niedrigschmelzenden Eutektika kommt es zum Erweichen der amorphen Phase während des Einsatzes bei hohen Temperaturen, was ein Absinken der Eigenschaften (Festigkeit, Kriechverhalten, Oxidationsbeständigkeit) zur Folge hat.

Möglichkeiten zur Verbesserung der Hochtemperatureigenschaften wurden in der Fachliteratur bereits beschrieben. Diese haben hauptsächlich eine Reduktion der Menge der Glasphase zum Ziel, so ist es möglich, Siliciumnitrid ohne zusätzliche Sinterhilfsmittel oder mit nur sehr geringen Additivzusätzen zu verdichten. Bei den im Additivgehalt reduzierten Ansätzen wurden zwei Wege beschritten. In US 4 904 624 wird über Versätze berichtet, die mit Gehalten <0,5 Gew.-% Al₂O₃ und von 1 bis 5 Gew.-% Y₂O₃ über ein Kapsel-HIP-Verfahren verdichtet werden. Als zweite Variante wird in demselben Patent die Herstellung von Werkstoffen mit nur 4 Gew.-% Y₂O₃ beschrieben, was aber ebenfalls nur über ein Kapsel-HIP-Verfahren möglich ist.

Diese Art von Werkstoffen mit reduzierten Additivgehalten bzw. gänzlich ohne Additive besitzen sehr gute Eigenschaften bei hohen Temperaturen, haben allerdings erstens meistens den Nachteil von unzureichenden Raumtemperatureigenschaften, was besonders für die additiv-freien Si₃N₄-Werkstoffe gilt.

Zweitens können diese im Additivgehalt reduzierten Werkstoffe bzw. die gänzlich additivfreien Varianten z.Zt. nur durch sehr kostenaufwendige Verfahren (Kapsel-HIP) verdichtet werden, was den Herstellungsprozeß stark verteuert und einer weitverbreiteten Anwendung dieser Werkstoffe entgegensteht.

Bei aluminiumhaltigen Si₃N₄-Keramiken (Al₂O₃, AIN) sind die Nachteile des Kapselhipens im wesentlichen ausgeschlossen, da sich hier sehr niedrigviskose Glasphasen während der Sinterung ausbilden. Allerdings sind diese Werkstoffe in ihrer Anwendung als Langzeit-Hochtemperaturbauteile bis zu Temperaturen von maximal 1200°C beschränkt, da infolge der Glasphasenzusammensetzung insbesondere die Kriech- und Oxidationsbeständigkeit stark nachläßt. Für Al₂O₃-haltige Si₃N₄-Keramiken ist dieser deutliche Eigenschaftsabfall mit steigender Temperatur in der Fachliteratur vielfach beschrieben worden.

Eine Verbesserung der Hochtemperatureigenschaften dieser Werkstoffe ist durch eine Nachbehandlung zur Kristallisation der Korngrenzenphase möglich. Im Gegensatz zu dem hier beschriebenen Verfahren erfolgt die Kristallisation bei Temperaturen unterhalb der Glasphasenneutektika, welche im Regelfall zwischen 1350 und 1500°C liegen.

Eine weitere Werkstoffvariante mit einem Potential für Hochtemperaturanwendungen stellen Mischkristall-bildende Si₃N₄-Systeme, die allgemein als SiAlONe bezeichneten α'-SiAlON/β'-SiAlONe dar. Dabei steht α-'SiAlON für ein System der allgemeinen Formel Meₓ(Si,Al)₁₂(O,N)₁₆ mit Me = Y oder Seltenerdelemente (SE), β-'SiAlON für ein System der allgemeinen Formel Si_{6-z}Al_{z}O_{z}N_{8-z}.

Die Kristallisation der Korngrenzphase von α'/β'-SiAlON-Mischkeramiken wird u.a. in EP 0 338 718 A2 beschrieben, wobei die bereits erwähnten Kristallisationstemperaturen von 1500°C jeweils nicht überschritten werden.

Die Gruppe der hier erfindungsgemäß vorliegenden α'/β'-Mischkeramiken wird in DE 33 06 157 A1 beschrieben, wobei in diesem Patent die α'/β'-Mischkeramiken durch eine dritte, meist amorph vorliegende Phase (Korngrenzphase), gekennzeichnet sind.

In EP 0 336 377 A2 werden ebenfalls α'/β'-Mischkeramiken beschrieben, die sich durch eine extreme Feinheit der α'- bzw. β'-Körner auszeichnen und deshalb gute Hochtemperatur-Eigenschaften besitzen.

In EP 0 338 718 A2 werden α'/β'-Mischkeramiken beschrieben, welche durch eine diskontinuierlich vorliegende Phase, welche auch auskristallisiert vorliegen kann, gekennzeichnet sind. Die Erzeugung dieser diskontinuierlichen Phase wird durch eine Temperaturbehandlung im Bereich 1600 bis 2000°C durchgeführt, wobei keine Angabe des aufgebrachten Druckes vorliegt.

In allen drei genannten Patenten, die sich mit dem Gebiet der α'/β'-SiAlON-Mischkeramik beschäftigen, werden keine Angaben zum Kriechverhalten der resultierenden Werkstoffe gemacht. Es muß davon ausgegangen werden, daß nicht die Kriechbeständigkeit der in US 4 904 624 genannten Werkstoffen (reduzierter Additivgehalt) erreicht wurde, was aber durch die erfindungsgemäß hergestellten α'/β'-SiAlON-Mischkeramiken der Fall ist.

Heißgepreßte Materialien mit einer Kriechdehnung ε von unter 5 Promille bei 1370°C und 77MPa sind aus Proc. Br. Ceram. Soc., Band 25 (1975), S. 263 bis 280 bekannt.

In DE-A-27 33 354 ist ein Verfahren zur Herstellung von β'-SiAION beschrieben, bei dem Verbindungen, die Silicium, Aluminium, Sauerstoff und Stickstoff in bestimmten Anteilen enthalten, bei Temperaturen von 1600 bis 2000°C unter Druck 10 Minuten bis maximal 5 Stunden gesintert werden. Die dabei erhaltenen Materialeigenschaften, wie z.B. die Kriechdehnung, sind jedoch noch unbefriedigend.

Die Kriecheigenschaften von Keramiken bei hohen Temperaturen werden in den meisten Fällen an Biegeprüfkörpern im statischen Biegekriechversuch ermittelt. Gemessen wird hier die Randfaserdehnung als Funktion der Belastungszeit bei vorgegebener Temperatur und Biegebelastung. Die Randfaserdehnung, vermindert um den Anteil an elastischer Biegedehnung, wird als Kriechdehnung bezeichnet. Die zeitliche Ableitung der Funktion ε = ε(t) wird als Kriechrate 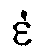 neben der Kriechdehnung als Kenngröße mit angegeben. Da die Kriechkurve nicht permanent linear verläuft, wird die Kriechrate aus der Steigung im zweiten Bereich der Kriechkurve (Bereich des stationären Kriechens) errechnet. In J. Am. Ceram. Soc. **76**(2) (1993) S. 553-556 werden Kriechraten für vier verschiedene kommerziell erhältliche Si₃N₄-Keramiken angegeben. Die Werte für έ liegen für eine Temperatur von 1250°C und eine Belastung von 300 MPa bei 3·10⁻⁶ l/h, was in Zusammenhang mit den Ausfalldaten bei 1400°C (STSR-Test) als relativ hoch anzusehen ist. Dies gilt ebenfalls für die Kriechdehnungen mit mehr als 2,5 Promille, die bei den Versuchen erhalten wurden.

In Bunk, W. und Hausner, H., "Ceramic Materials and Components for Engines", Verlag der DKG, Bad Honnef (1987), S. 485-494 wird das Kriechverhalten von 5 kommerziell erhältlichen Si₃N₄-Werkstoffen beschrieben. Die gemessenen Kriechraten bei 1400°C und einer Belastung von 70 MPa liegen hier mit 5·10⁻⁵ l/h bereits sehr hoch. Die absoluten Kriechdehnungen werden nicht angegeben, erwähnt wird aber, daß ein Probenbruch bei Werten kleiner als 30 Promille erfolgt, was auf erhaltene Kriechdehnungen in dieser Größenordnung hindeutet.

Dieser Erfindung liegt die Aufgabe zugrunde, einen Siliciumnitridwerkstoff auf Basis von α'/β'-SiAlON-Mischkeramiken zur Verfügung zu stellen, der sich durch herausragende Hochtemperatur-Langzeit-Eigenschaften, insbesondere durch eine hohe Kriech- und Oxidationsbeständigkeit auszeichnet und die beschriebenen Nachteile des Standes der Technik nicht aufweist.

Diese Anforderungen werden erfüllt durch einen gesinterten polykristallinen Werkstoff, bestehend aus den Phasen α'-SiAlON, β'-SiAlON, sowie amorphen und/oder kristallinen Korngrenzphasen, wobei Einlagerungs- und/oder Verstärkungskomponenten enthalten sein können, wobei der Werkstoff eine Kriechdehnung ε <5 Promille bei 1400°C/100 MPa nach 30 Stunden im Biegekriechversuch an Luft aufweist. Dieser Werkstoff ist Gegenstand dieser Erfindung. In einer bevorzugten Ausführungsform weist der erfindungsgemäße Werkstoff eine stationäre Kriechrate 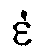 bei der Durchführung eines Biegekriechversuches bei 1400°C an Luft und einer Belastungsspannung von 100 MPa von geringer als 5·10⁻⁵ l/h auf.

Der erfindungsgemäße α'/β'-SiAlON-Werkstoff zeichnet sich nicht nur durch eine drastisch verbesserte Kriech- und Oxidationsbeständigkeit gegenüber den unbehandelten Proben aus, es wird sogar eine deutlich reduzierte Kriechgesamtdehnung beobachtet, die in der Größenordnung der konkurrierenden Si₃N₄-Werkstoffe auf Basis reduzierter Additivgehalte, die über aufwendige und teure Kapsel-HIP-Verfahren hergestellt werden müssen, liegt.

Gegenstand dieser Erfindung ist auch ein Verfahren zur Herstellung der erfindungsgemäßen Werkstoffe. Dieses ist dadurch gekennzeichnet, daß ein Grünkörper, welcher durch Mischmahlung von Si₃N₄, Al₂O₃ und/oder AlN, Y₂O₃ und/oder eines oder mehrerer Seltenerd-Oxide bzw. durch Mischmahlung von Si₃N₄ und einem vorsynthetisierten α'-SiAlON-Rohstoff mit anschließender Formgebung der resultierenden Pulver hergestellt worden ist, heißgepreßt, Gas- oder Normaldruckgesintert und anschließend einer Temperatur- und Druck-Sinternachbehandlung bei Temperaturen zwischen 1 500°C und 2 000°C und Drucken zwischen 5 und 2 000 bar unterzogen wird.

Dabei erfolgt vorzugsweise die Temperatur- und Druck-Sinternachbehandlung bei Temperaturen zwischen 1750°C und 2000°C und Drucken zwischen 50 und 1000 bar, als Druckmedien bei der Nachbehandlung werden bevorzugt Stickstoff, Edelgase oder Mischungen daraus eingesetzt.

Beim erfindungsgemäßen Verfahren kommt es im Gegensatz zu den bekannten Sinter- bzw. Kapsel-HIP-Verfahren (Nachverdichtung von geschlossener Porosität durch zusätzliche Druckaufbringung) zu Veränderungen der Glasphase in den Korngrenzen und Kornzwickeln bezüglich ihrer Menge und der Zusammensetzung sowie zu einer Änderung der Mischkristallzusammensetzungen, ohne daß Kristallisationsvorgänge in der amorphen Phase beobachtet werden. Es zeigt sich hierbei, daß durch die thermische Nachbehandlung keine signifikante Veränderung in der Zusammensetzung des vollständig verdichteten Siliciumnitridkörpers auftritt. Obwohl die chemische Zusammensetzung im Siliciumnitridformkörper konstant bleibt, werden überraschenderweise ein höherer Kriechwiderstand und eine verbesserte Oxidationsbeständigkeit bei hohen Temperaturen im Vergleich zum nur verdichteten Siliciumnitridmaterial nach dem primären Sinterprozeß gefunden.

Die sekundäre thermische Resorptionsbehandlung kann sowohl während der Sinterung als zusätzlicher Prozeßschritt als auch durch eine nachfolgende Temperung unabhängig von der Sinterung erfolgen.

Ein wesentlicher Vorteil des erfindungsgemäßen Verfahrens besteht auch darin, daß SiAlON-Werkstoffe mit relativ hohen Sinterhilfsmittelgehalten, die eine Verdichtung durch Gasdrucksintern oder auch durch druckloses Sintern ermöglichen, durch die Modifizierung der Korngrenzphase nach dem Sintern, ein für Hochtemperaturapplikationen notwendiges Eigenschaftsniveau aufweisen. Mit der Erhöhung des Sinterhilfsmittelanteils können auch die Raumtemperatureigenschaften (Verbesserung der Zuverlässigkeit durch Erhöhung von Biegebruchfestigkeit und Bruchzähigkeit) vorteilhaft beeinflußt werden.

Im folgenden wird die Erfindung beispielhaft erläutert, ohne daß hierin eine Einschränkung zu sehen ist.

### Beispiele 1 bis 3 (Vergleichsbeispiele)

Siliciumnitridpulver mit einer spezifischen Oberfläche von 11 m²/g, einem Verunreinigungsgehalt von <0,05 % und einem Sauerstoffgehalt von 1,1 % wird mit einem Gemisch der Sinterhilfsmittel Y₂O₃ und AlN (Zusammensetzung siehe Tabelle 1) in Isopropanol mischgemahlen. Danach wird das Pulvergemisch im Vakuum getrocknet, granuliert und an Luft bei Temperaturen von ca. 400°C ausgeheizt. Anschließend wird das Pulvergemisch in einer Graphitmatrize bei 1840°C 60 min lang heißgepreßt. Die vollständig verdichtete Heißpreßplatte wird dann der thermischen Nachbehandlung bei 1900°C und 180 MPa (Stickstoffdruck) in einer heißisostatischen Presse 2 Stunden lang unterzogen. Nach einer entsprechenden Finish-Bearbeitung (Trennen, Schleifen und Anphasen zu Biegebruchstäben) werden die relative Dehnung ε nach 30 Stunden und die stationäre Kriechrate 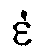 (entspricht dε/dt) aus dem Kriechexperiment, welches bei 1400°C und einer Belastung von 100 MPa durchgeführt wurde sowie die auf die Probenfläche bezogene Massenzunahme (hier als OxRate bezeichnet) nach einem Oxidationsversuch bei 1350°C nach 100 Stunden an Luft bestimmt. Diese Eigenschaften sind mit denen von nur heißgepreßten Werkstoffen gleicher Ausgangszusammensetzung verglichen worden. Die Ergebnisse sind in Tabelle 1 dargestellt.

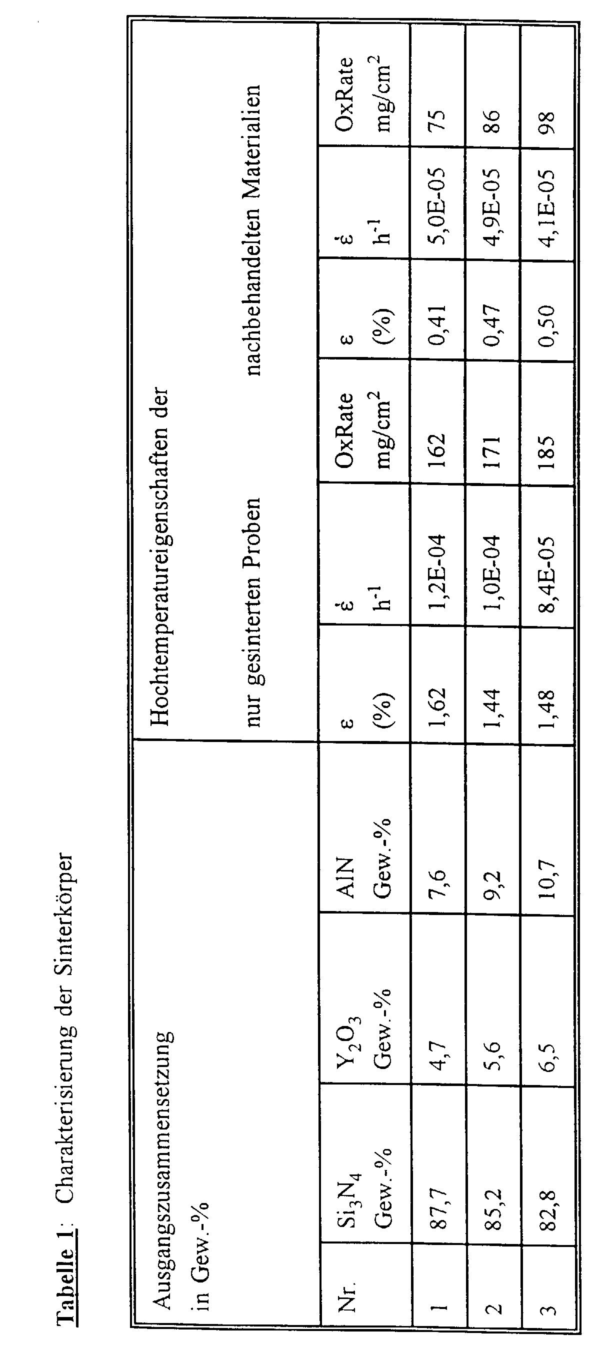

### Beispiele 4 und 5

Siliciumnitridpulver wird entsprechend Beispiel 1 mit einem Gemisch der Sinterhilfsmittel Y₂O₃ und AlN (Zusammensetzung siehe Tabelle 2) in Isopropanol mischgemahlen. Anschließend wird das Pulvergemisch im Vakuum getrocknet, granuliert und an Luft bei Temperaturen von ca. 400°C ausgeheizt. Danach wird die Pulvermischung durch kaltisostatisches Pressen zu Grünkörpern verarbeitet, die dann in einem Gasdrucksinterofen bei 1850°C, 5 MPa 1 Stunde lang gesintert werden. Nach der vollständigen Verdichtung erfolgt die thermische Nachbehandlung bei 1900°C und 10 MPa (Stickstoffdruck) 2 Stunden lang im Drucksinterofen in einem Zyklus mit der Sinterung. Nach einer entsprechenden Finishbearbeitung (Trennen, Schleifen und Anphasen zu Biegebruchstäben) werden die relative Dehnung ε nach 30 h und die stationäre Kriechrate 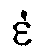 aus dem Kriechexperiment (1400°C, 100 MPa) sowie die Massezunahme nach einer Oxidation an Luft nach 100 Stunden bei 1350°C bezogen auf die Probenoberfläche bestimmt (OxRate). Diese Eigenschaften sind mit denen von nur gesinterten Werkstoffen gleicher Zusammensetzung verglichen worden. Die Ergebnisse sind in Tabelle 2 dargestellt.

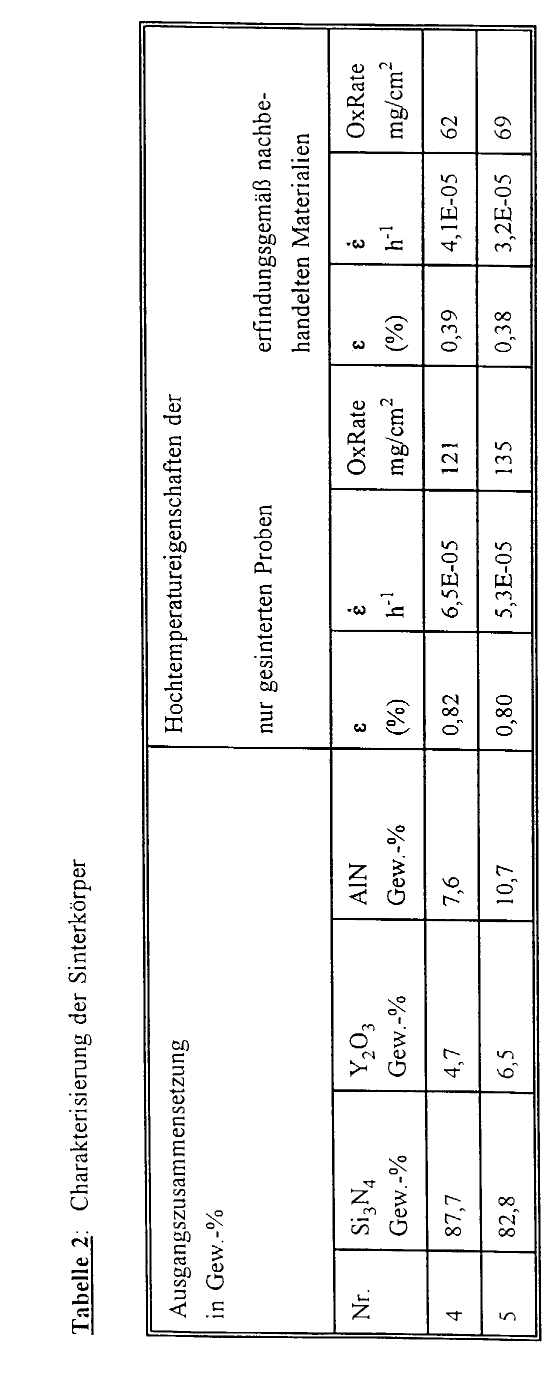

## Patentansprüche

1. Gesinterter polykristalliner Werkstoff, bestehend aus den Phasen α'-SiAlON, β'-SiAlON, sowie amorphen und/oder kristallinen Korngrenzphasen, wobei Einlagerungs- und/oder Verstärkungskomponenten enthalten sein können, dadurch gekennzeichnet, daß der Werkstoff eine Kriechdehnung ε <5 Promille bei 1 400°C/100 MPa nach 30 Stunden im Biegekriechversuch an Luft aufweist.

2. Werkstoff gemäß Anspruch 1, dadurch gekennzeichnet, daß er eine stationäre Kriechrate 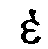 bei der Durchführung eines Biegekriechversuches bei 1 400°C an Luft und einer Belastungsspannung von 100 MPa von geringer als 5·10⁻⁵ l/h aufweist.

3. Verfahren zur Herstellung eines Werkstoffes gemäß einem der Ansprüche 1 oder 2, dadurch gekennzeichnet, daß ein Grünkörper, welcher durch Mischmahlung von Si₃N₄, Al₂O₃ und/oder AlN, Y₂O₃ und/oder eines oder mehrerer Seltenerd-Oxide bzw. durch Mischmahlung von Si₃N₄ und einem vorsynthetisierten α'-SiAlON-Rohstoff mit anschließender Formgebung der resultierenden Pulver hergestellt worden ist, heißgepreßt, Gas- oder Normaldruck-gesintert und anschließend einer Temperatur- und DruckSinternachbehandlung bei Temperaturen zwischen 1 500°C und 2 000°C und Drucken zwischen 5 und 2 000 bar unterzogen wird.

4. Verfahren gemäß Anspruch 3, dadurch gekennzeichnet, daß die Temperatur- und Druck-Sinternachbehandlung bei Temperaturen zwischen 1 750°C und 2 000°C und Drucken zwischen 50 und 1 000 bar erfolgt.

5. Verfahren gemäß einem der Ansprüche 3 oder 4, dadurch gekennzeichnet, daß als Druckmedium bei der Nachbehandlung Stickstoff, Edelgase oder Mischungen daraus eingesetzt werden.

## Claims

1. A sintered polycrystalline material consisting of the phases α'-SiAlON, β'-SiAlON and amorphous and/or crystalline grain boundary phases , wherein interstitial and/or reinforcement components may be present, characterised in that the material has a creep elongation ε < 5 per thousand at 1400°C/100 MPa after 30 hours in a flexural creep test in air.

2. A material according to Claim 1, characterised in that it has a steady-state creep rate 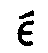 of less than 5 x 10⁻⁵ l/h during performance of a flexural creep test at 1400°C in air under a loading strain of 100 MPa.

3. A process for preparing a material according to one of Claims 1 or 2, characterised in that an initial material which has been prepared by the mixing and crushing of Si₃N₄, Al₂O₃ and/or AlN, Y₂O₃ and/or one or more rare earth oxides or by the mixing and crushing of Si₃N₄ and a presynthesised α'-SiAlON raw material and subsequent shaping of the resulting powder, is hot compressed, sintered under an applied gas pressure or at atmospheric pressure and then subjected to thermal and compression sintering after-treatment at temperatures between 1500°C and 2000°C and at pressures between 5 and 2000 bar.

4. A process according to Claim 3, characterised in that the thermal and compression sintering after-treatment is performed at temperatures between 1750°C and 2000°C and at pressures between 50 and 1000 bar.

5. A process according to one of Claims 3 or 4, characterised in that nitrogen, noble gases or mixtures thereof are used as the compression medium during after-treatment.

## Revendications

1. Matériau polycristallin fritté consistant en les phases α'-SiAlON, β'-SiAlON et phases de limites de grains amorphes et/ou cristallines, avec le cas échéant des composants d'inclusion et/ou renforçants, caractérisé en ce que le matériau a un allongement au rampage ε inférieur à 5 pour mille à 1400°C/100 MPa après 30 h à l'essai de rampage sous flexion à l'air.

2. Matériau selon la revendication 1, caractérisé en ce qu'il a un taux de rampage stationnaire ε' inférieur à 5.10⁻⁵ l/h dans l'essai de rampage sous flexion à 1400°C à l'air sous une tension de charge de 100 MPa.

3. Procédé de préparation d'un matériau selon l'une des revendications 1 ou 2, caractérisé en ce que l'on comprime à chaud un corps cru qui a été préparé par broyage en mélange de Si₃N₄, Al₂O₃ et/ou AIN, Y₂O₃ et/ou un ou plusieurs oxydes des terres rares ou par broyage en mélange de Si₃N₄ et d'une matière première du type α'-SiAlON synthétisée au préalable avec moulage subséquent des poudres obtenues, on le fritte sous pression de gaz ou à pression normale puis on le soumet à un traitement complémentaire de frittage en température et sous pression, à des températures de 1500 à 2000°C sous des pressions de 5 à 2000 bars.

4. Procédé selon la revendication 3, caractérisé en ce que le traitement complémentaire de frittage en température et sous pression est réalisé à des températures de 1750°C à 2000°C sous des pressions de 50 à 1000 bars.

5. Procédé selon une des revendications 3 ou 4, caractérisé en ce que le milieu établissant la pression lors du traitement subséquent consiste en azote, gaz rares ou leurs mélanges.
